# EUROPEAN PATENT APPLICATION

(11) **EP 1 909 454 A1**
(43) Date of publication of application: **09.04.2008**
(21) Application number: 07075951.9
(22) Date of filing: 22.06.1999
(51) Int. Cl.: H04L 29/06

(54) **A method for controlling the internet protocol data transfer of digital mobile systems**

(62) Divisional of application: 99112016.3
(71) Applicant: SIEMENS AKTIENGESELLSCHAFT, 80333 München (DE)
(72) Inventor: Rysgaard, Bent, 9220 Aalborg (DK)

(57) **Abstract**

The present invention provides a method for controlling the Internet Protocol data transfer of digital mobile systems, wherein an Internet terminal (100, 101, 102, 103) is connected to the Internet via a mobile communication system (10), particularly a mobile phone, comprising the steps of configuring said mobile communication system (10) for at least a first and second Internet Protocol data transfer mode, each mode having an associated protocol stack (20, 30); automatically determining which of the first and second modes is available; deciding which of the first and second modes is used during an Internet call in accordance with a predetermined criterion; and switching the Internet Protocol data transfer to the other mode, if during an Internet call the currently used mode becomes unavailable, and the other mode is still available.

## Description

The present invention relates to a method for controlling the Internet Protocol data transfer of digital mobile systems, wherein an Internet terminal is connected to the Internet via a mobile communication system, particularly a mobile phone.

Although applicable to any digital mobile system, the present invention and its underlying problems will be discussed with particular reference to GSM digital mobile systems.

Today when a mobile user is using for example a packet switched bearer for data communication, the situation might appear where that service is no longer available. If this happens the user risks having to find out why his/her application is no longer working and afterwards maybe reconfigure both the Personal Computer and the mobile to connect to a circuit switched bearer. This is both annoying and tiresome.

Also, f.e. when using packet data, it could easily be imagined that more than one user in the same group of people would like to use the packet data possibilities of one mobile. Protocolwise, this is not a problem but the mobile has to be equipped with more than one physical interface or a multiplexing physical interface enabling to support more than one user, f.e. BLUETOOTH. This would allow the group to block only one mobile for packet data services leaving the rest for speech.

When more than one user is using one mobile for Internet protocol communication, it is annoying if the mobile is not supporting more than one user when switching to f.e. circuit switched connections due to loss of coverage of packet switched possibilities. Which of the users should loose the ability to continue using his/her application?

In this respect, the existing mobiles are very unflexible.

The present invention provides a method for controlling the Internet Protocol data transfer of digital mobile systems, wherein an Internet terminal is connected to the Internet via a mobile communication system, particularly a mobile phone, according to claim 1.

A particular advantage is that the mode problem can be made automatic and transparent to the user, if he/she has already configured the mobile communication system to communicate on both bearers. The user is independent of which and when data services are available when using Internet Protocol applications. One available according to the criterion, f.e according to a preferred list will be used.

The principal idea underlying the present invention is using a GSM mobile having an automatic switch/multiplexer for Internet protocol data transfer over different bearers.

Preferred embodiments of the present invention are listed in the dependent claims.

According to a preferred embodiment, if during an Internet call the currently used mode becomes unavailable, and the other mode is still available, the Internet Protocol data transfer is switched to the other mode.

According to a further preferred embodiment, the first mode is the packet switched mode mediated by an Internet service provider and the second mode is the circuit switched mode over a direct access point.

According to a further preferred embodiment, said mobile comprises a plurality of external interfaces for Internet protocol data transfer, comprising the steps of connecting a plurality of terminals to said plurality of external interfaces; deciding which of the first and second modes is used during an simultaneous Internet call of said plurality of terminals in accordance with a predetermined criterion; and multiplexing said simultaneous Internet call of said plurality of terminals in said decided mode. Thus, more than one user can use the same mobile for Internet communication. The multiplexing of data between users known in GPRS is also available when using circuit switched data communication.

According to a further preferred embodiment, the step of multiplexing an internal communication facility call with at least one external terminal call is further comprised.

According to a further preferred embodiment, personal computers are used as terminals.

The present invention will become more fully understood by the following detailed description of preferred embodiments thereof in conjunction with the accompanying drawings, in which:
- Fig. 1: shows an Internet terminal connected to a mobile phone for illustration of a first embodiment of the method according to the present invention; and
- Fig. 2: shows three different Internet terminals connected to a mobile phone for illustration of a second embodiment of the method according to the present invention.

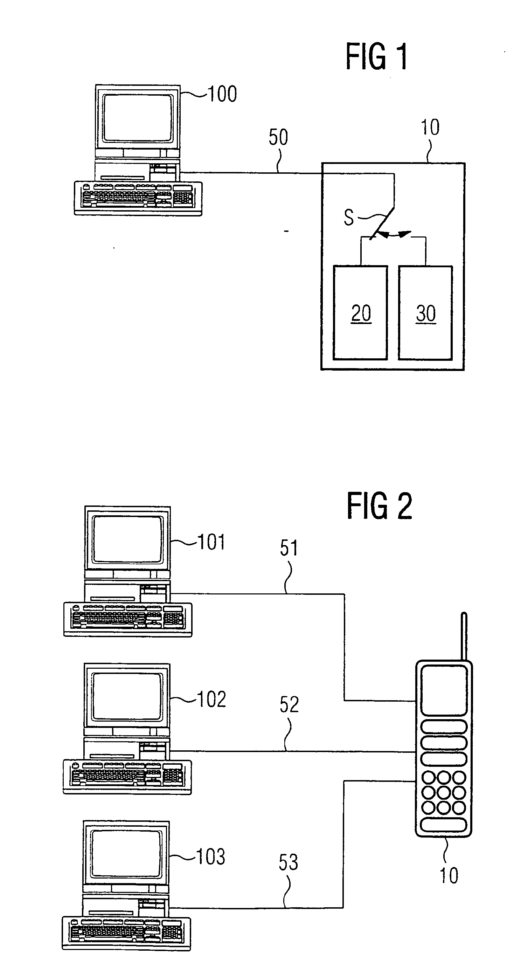

Fig. 1 shows an Internet terminal connected to a mobile phone for illustration of a first embodiment of the method according to the present invention.

Fig. 1, 10 denotes a mobile phone, 50 a connection line, 100 a personal computer, S a mode switch, 20 a packet switched protocol stack, and 30 a circuit switched protocol stack.

If a user of the personal computer 100 is using an application sending/receiving Internet protocol datagrams, the user can activate or operate the switch S of mode from f.e. packet switched to circuit switched data communication if he/she camps in a cell not supporting packet switched data communication and of course vice versa.

Of course, the mobile phone 10 must be configured with the right set of parameters before the switch S can be done automatically. In other words, he has to configure said mobile phone 10 for at least said first and second Internet Protocol data transfer modes, each mode having an associated protocol stack 20, 30. Alternatively, the configuration is implicite through the user's subscription and/or through network mediated negotiation when accessing the network.

Here, the first mode is the packet switched mode mediated by an Internet service provider and the second mode is the circuit switched mode over a direct access point.

After said initial configuration, the mobile phone automatically determines which of the first and second modes is available and decides which of the first and second modes is used during an Internet call in accordance with a predetermined criterion. If only one mode is available, said decision is easy. If two modes are available, said decision will be dependent on criteria such as data transfer speed, signal/noise ratio, etc. These criteria are subject to changes. Thus, repeated decisions may become necessary, i.e. a continuously adaptive procedure.

Fig. 2 shows three different Internet terminals connected to a mobile phone for illustration of a second embodiment of the method according to the present invention.

In Fig. 2, 101, 102, 103 denote respective personal computers and 51, 52, 53 associated connection lines. Not shown is a multiplexer in the mobile phone 10 for multiplexing the three personal computers 101, 102, 103 in the same mode.

By using the multiplexing capabilities of the GPRS (general packet radio service) protocol stack it is possible to support communication from more than one Internet protocol stack at a time. Extending the principle to multiplex between internal and external protocol stacks, the user is f.e. independent of receiving an E-mail to the mobile 10 based E-mail application while WWW browsing on an external device. Alternatively, two personal computer users can use the same mobile phone 10 for Internet protocol communication, as illustrated in Fig. 2.

If the user is using more than one application/device on the same GPRS protocol stack, the user will be annoyed if only one application will be allowed to continue when switching to circuit switched data communication fx because a cell change has resulted in a change to a cell not supporting GPRS. This can be helped by multiplexing on top of the circuit switched protocol stack for Internet protocol communication.

This principle is well-known from Personal Computers where more than one PC in a LAN can use the same telephone line for Internet access through software in the PC holding the physical connection, i.e. the physical connection is independent.

Currently the specifications do not specify how packet data (f.e. TCP/IP) can be switched automatically or semiautomatically between circuit and packet switched bearers where the mobile protocol stack itself switch PDU's (packet data units) to/from the GSM bearers available. Also, if f.e. HSCSD (high speed circuit switched data) is used as transfer service, there is no multiplexing of internal and/or external applications communicating PDU's. This can easily be done by having the mobile protocol stack working as a switch/multiplexer offering this service to f.e. the external and/or internal based applications using Internet protocol.

Also having the mobile multiplexing Internet protocol traffic over both packet and circuit switched bearers, the mobile can offer Internet protocol traffic to more than one external interface.

This will also hide the bearer from the user so that he/she does not have to reconfigure to switch between bearers. Also this will allow more than one terminal entity (PC or the like) to use the same mobile as connection to the internet.

Although the present invention has been described with respect to preferred embodiments thereof, it should be understood that many modifications can be performed without departing from the scope of the invention as defined by the appended claims.

Particularly, the invention is not restricted to mobile phones, but may be applied to any mobile digital communication system. Also, the terminals may be television sets with so called Internet topset box as an adapter. Moreover, the invention is not limited to the aforementioned two modes, but can be extended to more and/or other modes.

## Claims

1. A method for controlling the Internet Protocol data transfer of digital mobile systems, wherein an Internet terminal (100; 101, 102, 103) is connected to the Internet via a mobile communication system (10), particularly a mobile phone, comprising the steps of:
- configuring said mobile communication system (10) for at least a first and second Internet Protocol data transfer mode, each mode having an associated protocol stack (20, 30);
- automatically determining which of the first and second modes is available;
- deciding which of the first and second modes is used during an Internet call in accordance with a predetermined criterion;
**characterized by**
- switching the Internet Protocol data transfer to the other mode, if during an Internet call the currently used mode becomes unavailable, and the other mode is still available.

2. The method according to claim 1,
wherein the first mode is the packet switched mode mediated by an Internet service provider and the second mode is the circuit switched mode over a direct access point.

3. The method according to claim 1 or 2,
further comprising the step of multiplexing an internal communication facility call with at least one external terminal call.

4. The method according to claim 1, 2 or 3,
wherein personal computers are used as terminals.
